(19) Europäisches Patentamt
European Patent Office
Office européen des brevets

(11) **EP 2 337 177 B1**

(12) **EUROPEAN PATENT SPECIFICATION**

(45) Date of publication and mention
of the grant of the patent:
**07.06.2017 Bulletin 2017/23**

(51) Int Cl.:
*H02H 7/08* *(2006.01)*          *H02H 1/00* *(2006.01)*
*H02H 3/38* *(2006.01)*

(21) Application number: **09180222.3**

(22) Date of filing: **21.12.2009**

(54) **Electronic system and protection method for electric motors**

Elektronisches System und Schutzverfahren für Elektromotoren

Système électronique et procédé de protection pour moteurs électriques

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**22.06.2011 Bulletin 2011/25**

(73) Proprietor: **Bitzer Compressores Ltda.**
**06711-250 Cotia / SP (BR)**

(72) Inventor: **Garcia Moreira, Raphael**
**05159-090, PIRITUBA / SP (BR)**

(74) Representative: **Studio Torta S.p.A.**
**Via Viotti, 9**
**10121 Torino (IT)**

(56) References cited:
EP-A1- 0 740 381          US-A- 4 453 117
US-A- 5 337 206          US-A- 5 930 092
US-A1- 2006 185 373          US-A1- 2006 256 488

• **Çolak I., et al.: "On line protection systems for induction motors" Elsevier Ltd. Energy Conversion and Management vol. 46, no. 17, 3 March 2005 (2005-03-03), pages 2773-2786, XP002580114 Internet DOI: doi:10.1016/j.enconman.2005.01.008 Retrieved from the Internet: URL:http://www.sciencedirect.com/science?_ob=MImg&_imagekey=B6V2P-4FM5CSH-1-10&_cdi= 5708&_user=987766&_pii=S0196890405000294&_ orig=search&_coverDate=10%2F31%2F2005&_sk= 999539982&view=c&wchp=dGLzVzb-zSkWA&md5=10 c53d951a420ff69c216fd17050ce54&ie=/sdarticle.pdf> [retrieved on 2010-04-23]**

**Description**

FIELD OF THE INVENTION

The present invention refers to an electronic system and a method whose main objective is to protect electric motors and, more specifically, a monitoring system, a set of rules and a processing core which makes inferences in order to protect the motor from overloads and possible electric failures, and also identifies them.

BACKGROUND OF THE INVENTION

The current protection systems for electric motors are based on a set of devices developed to detect failures that may harm the electric features of motors. Among these, we can mention the most widely used systems in industrial facilities, as follows:

1. Overload relays: overloads are caused by blocked rotors, high frequency of maneuvers, long starts, requests above the established design limit, lack of phase and variations in tension and frequency. Such safety devices may be based on two different principles: a) bimetal overload relay, with one relay located in each feed phase of the motor, each one of them constituted of a pair of metal blades, said blades made of metals with different linear thermal dilatation coefficients, and of a firing device contained in an insulated pack with high thermal resistance; and b) electronic overload relay, which is constituted of an electronic circuit that actuates on the system due to a correlated temperature value versus resistance, whose resistance is a function of a temperature sensor coupled to the motor stator and that has a characteristic curve, wherein the electronic system converts said value output from the sensor and actuates on the system due to the temperature.
2. Circuit breaker: these are partly constituted of an overload relay and a coil system per phase. When an electric current determined by the coil passes, it, actuates the mechanical system to flip the contacts of the circuit breaker and cut the current flow.
3. Fuses: these are based on the principle that the current passing through the conductor generates heat inside, proportional to the square of its intensity, according to Joule's integral. Based on this principle, the conductor inside the fuse is dimensioned so that, under a given current level, the heat transmission effect occurs near the adiabatic system, causing the rupture of said internal conductor by melting, thus interrupting the current flow in the phase where it is installed. The main disadvantage of this system is that it does not interrupt all the phases involved in the system, but just the one where the overload occurred, and the interruption of a phase will, in fact, cause a lack of phase.
4. Phase-loss relays: these are used to ensure that the motor only works in the presence of electric tension in all its electric doors. Phase-loss relays are usually installed before the maneuver element, usually called contactor, and, without tension in any phase, they cut feeding to the motor.

One of the problems connected to the use of phase-loss relays is its location in relation to the motor, i. e. before the contactors. In this case, and in case of failure in any of the contactors, the phase-loss relays will continue to identify the presence of feeding tension in all phases, thus not detecting the contactor failure and therefore hampering motor protection.

Another problem concerning phase-loss relays is the fact that users frequently do not use relays that present a circuit that compares discrepancy angles between the phases to ensure the correct symmetry between the phases. As known, when there is lack of phase, a tension is induced in it. Said tension is close to the nominal tension and is proportional to the inertia of the motor and the power used by it. Therefore, such tension induced in the phase with problems may "deceive" the phase-loss relay, compromising motor operation. To overcome said inconvenience, there are relays that, by means of a complex circuitry, analyze phase discrepancy angles between the phases; however, said circuits substantially increase cost of said protection systems.

The protection systems in items 1, 2 and 3 above have, besides the features individually explained, a common disadvantage. Since all the above systems are based on the identification of a temperature increase somewhere in the motor/circuit, in certain situations, these systems are slow to respond, due to the process of heat transfer between the parts. Thus, the maximum limits of current or temperature, regarding its insulation class, may be exceeded due to the slow response from said safety devices. Particularly, there are specific applications where the measurement of temperature is fully compromised, for example in refrigeration systems. In these applications, the motor incorporated to the compression system is exposed to low temperature gases that come from the refrigeration system, which in turn make the sensors respond to the low temperature gases and not to the real motor temperature. As a consequence, the motor may be operating at high currents, but the heat is transferred to the gas before causing variations in the sensor response.

Finally, there are problems caused by the low quality of the energy supplied to the electric motor, particularly in the presence of harmonics in the feeding tension of the motor and of harmonics in the motor current. Harmonics may cause severe damage to the motor, such as overheating, pulsing torques, motor speed variation, etc. Another serious problem caused by harmonics is due to the fact that, in certain cases, one wants to correct the power factor, but, when capacitors are put in parallel with the motor, there is a considerable possibility that such capacitor enters into resonance with some harmonic component of the system, which may cause severe damage to the motor and to other electric supply loads. US 44 53 117 discloses an electronic system to protect electric motors according to the preamble of claim 1.

BRIEF DESCRIPTION OF THE INVENTION

The scope of the present invention is a system and a method for the protection of electric motors, particularly three-phase induction electric motors that can overcome the inconveniences presented in the state of the art. The scope of the present invention is particularly a system and a method for the protection of electric motors based on the control of parameters not subject to interferences from the environment where the motor is located, such as temperature. According to the present invention, an electronic system with the features of claim 1 and a method with the features of claim 2 are provided.

DESCRIPTION OF DRAWINGS

The present invention may be better understood with the detailed description that follows, given as a preferable way of realization and with reference to the attached figures, wherein:

- Figure 1A shows a general connection scheme of the protection system mentioned in the present invention with a motor and its corresponding maneuver element;
- Figure 1B shows a general connection scheme of an alternative embodiment of the protection system disclosed by the present invention, for a motor with six electric doors, with "divided start", and its corresponding maneuver element;
- Figure 2 shows the part of the algorithm that measures the tensions and electric currents and controls the operation of the motor;
- Figure 3 shows the part of the algorithm that actuates the turnoff of the motor;
- Figure 4 shows the part of the algorithm that analyzes and controls the currents when the motor is started;
- Figure 5 shows the part of the algorithm that analyzes and controls the maximum allowed imbalance levels among the electric currents of each electric door of the motor;
- Figure 6 shows the part of the algorithm that calculates and controls the maximum Δi/Δt levels;
- Figure 7 shows the part of the algorithm that impedes the motor operation in case of lack of tension at one of its electric doors;
- Figure 8 shows the part of the algorithm that does not allow the motor to work above its maximum capacity limit;
- Figure 9 shows the part of the algorithm that analyzes and controls the DHT levels in the tension delivered to the motor;
- Figure 10 shows the part of the algorithm that makes the analysis and control so that the motor does not operate out of the maximum and minimum limits for the power factor;
- Figure 11 shows the part of the algorithm that must be followed if any failure is detected in other processes;
- Figure 12 shows the part of the algorithm that must be followed to activate the alarm, when the motor operates without having been activated by the electronic board, integrating part of the present invention;
- Figure 13 shows the part of the algorithm to activate the alarm, when a current detected in the earth conductor of the motor is higher than the maximum established value; and
- Figure 14 shows the part of the algorithm to calculate the motor torque in relation to the current and the feeding tension.

DESCRIPTION OF A PREFERENTIAL EMBODIMENT OF THE INVENTION

Initially, it is important to highlight that, despite the fact that the system of the present invention is disclosed to protect a three-phase induction electric motor, other kinds of motors, fed by other types of electric supply, may also be controlled and protected by the system described herein.

According to the illustrations above, 1 indicates, as a whole, an electronic system and protection of electric motors. The electronic system 1 is basically composed of a processor 2, which receives the information coming from a number of sensors and that acts on the contactor K of the motor M. Examples of such a device include, without limitation: analogue devices, analogue computation modules; digital devices including, without limitation, small, medium and large scale integrated circuits, application-specific integrated circuits (ASICs) and programmable logical applications (PLAs); digital computation modules including, without limitation, central processing units (CPUs), microcomputers, microprocessors, dedicated or non-dedicated microcontrollers and programmable logical controllers (PLCs). In a preferable embodiment of the invention, the processor 2 is selected between DSPs and DSCs. In another preferable embodiment of the invention, the processor 2 is a DSP with processing frequency above 120 MHz.

The motor M, in this case, is a three-phase electric induction motor, which is fed by lines $L_R$, $L_S$, $L_T$ and $L_{Earth}$ from a conventional three-phase electric supply (R, S, T, Earth). Between the electric supply (R, S, T, Earth) and the feeding terminals U, V and W of the motor M, it is installed a maneuver element or contactor K, known per se, which is able to turn on and off, simultaneously, the three feeding phases of the motor M, and, therefore able to turn on and off the motor M itself. The actuation of the contactor K is electronically controlled by the processor 2, as known in the art, and therefore does not require a detailed description. It is important to stress that the processor 2, preferably by means of an appropriate actuation interface 4, sends a first signal indicating the operation of the motor (on level) and another signal indicating the non-operation of the motor (off level) to the contactor K, wherein, in the first level (on) the contactor keys are closed and, in the second level (off), the keys are open, fully interrupting the feeding to the motor M. Preferably, the actuation interface 4 comprises or example, a relay that acts as a driver. More specifically, the processor saturates a transistor, which activates a small relay at the actuation interface 4, which finally activates the contactor K. Alternatively, an SCR, TRIAC, etc., could be used instead of the relay.

Furthermore, said processor 2 is connected to an external actuator 5, through which the operator informs the system of the need to operate the motor M. Alternatively, said start signal may originate from another electronic or electro-mechanical system, such as a timer, a pressure controller, a thermostat, a button or key, etc., which indicates, by means of an electric signal, the need to activate the motor M.

Between the electric supply (R, S, T, Earth) and the contactor K, tension sensors $ST_1$, $ST_2$ and $ST_3$ are placed, said sensors are able to determine the feeding tension supplied to the motor M, at each one of the feeding phases. Preferably, tension sensors $ST_1$, $ST_2$ and $ST_3$ are conventional tension reading circuits. There are no critical limitations regarding the type of tension sensor used in the present invention. Alternatively, and depending on the type of tension sensor used, appropriate interfaces may be included, to allow the connection and reading of data informed by sensors to the processor 2, as far as known by the state of the art. Said interfaces may comprise, among others, A/D converters, serial communication, etc.

Between the motor M and the contactor K, current sensors $SC_1$, $SC_2$, $SC_3$ and $SC_4$ are interposed, one for each phase and one for earth $L_{Earth}$. According to the invention, current sensors $SC_1$, $SC_2$, $SC_3$ and $SC_4$ are Hall- effect sensors, known in the art by their wide range of response and linearity, and reduced error.

In this case it is important to stress the location of the various current and tension sensors, respectively, before and after the contactor K. Said arrangement of sensors allows a more accurate analysis of the operational characteristics of the motor M (as will be explained in further detail below). Said arrangement of sensors makes the analysis more precise and offers a bigger volume of data than the ones supplied by the protection systems in the state of the art. In addition, the operation of the processor 2 directly on the contactor K, intermediated by the actuation interface 4, enables the motor to be disconnected from its feeding in the occurrence of a failure, or before an imminent failure, thus protecting and increasing the life of the motor, and possibly of the equipment connected to it (e. g. a condenser).

The processor 2 is also connected to a communication interface 3, which receives the information and indications coming from the processor 2 and converts them into visual, sound, written, etc. indications. In other words, when the processor 2 detects any failure in the operation of the motor M, particularly by activating any of the test routines, such failure is informed to the communication interface 3. The communication interface 3 receives the failure indication and sends information to the user of the failure that is causing the motor to be turned off, in the form of a written or symbolic indication on a display, or a sound signal produced by a sound alarm, or a light indication produced by a spy light or by any appropriate form that may allow the user to detect what caused the motor M to be turned off.

The communication interface 3 can also be used to provide the user with indications that are shown on a display regarding several parameters measured by the sensors $SC_1$, $SC_2$, $SC_3$, $SC_4$, $ST_1$, $ST_2$ and $ST_3$. In other words, the communication interface 3 may be configured to keep on the display the values of the currents $I_R$, $I_S$, $I_T$ and $I_{Earth}$ measured in lines $L_R$, $L_S$, $L_T$ and $L_{Earth}$, respectively, and the tension values of $U_R$, $U_S$ and $U_T$ measured in lines $L_R$, $L_S$ and $L_T$. Furthermore, the communication interface 3 can inform the user the results of the many calculations made by the processor 2, such as the value of the power factor, mechanical torque, etc.

In another aspect of the present invention, the measurements of current and tension, which arise from the above indicated arrangement of Sensors $SC_1$, $SC_2$, $SC_3$ and $SC_4$, as well as $ST_1$, $ST_2$ and $ST_3$, respectively, and the qualification of these sensors, are submitted to a range of analytic rules that determine any incorrect operation parameters of the motor, and the possible failure hazards, thus increasing the protection of the motor.

Regarding said analytic rules and in order to make the description below more understandable and clear, said rules will be individually analyzed and in a preferable sequence of operation. However, it must be clear that the order of execution of each rule of analysis may be freely changed, unless indicated otherwise. Furthermore, the rules may be executed in parallel and simultaneously, or partially in parallel, except when one rule depends on the result of a previous one.

After the processor 2 receives an electric or electronic order for the operation of the motor 2, it begins to receive readings from a number of sensors located in the feeding circuit of the motor M, as indicated above, and to analyze said readings.

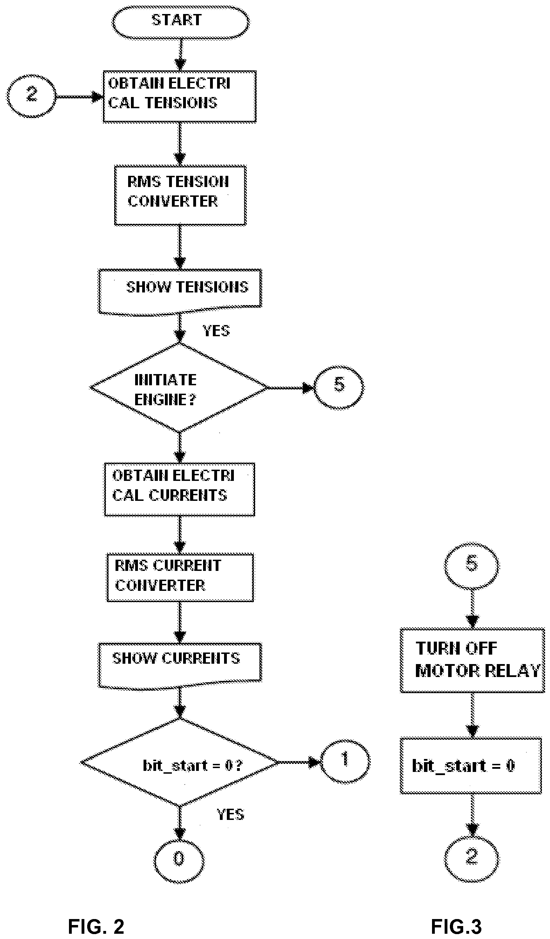

Thus, the first test (start test) to be made is exactly the start of the motor. For this test, the processor 2 initially receives a start signal from the external actuator 5 and thus the system begins to receive the values measured for the tensions $U_R$, $U_S$ and $U_T$, measured in lines $L_R$, $L_S$ and $L_T$ and converts said values into RMS measurements. If there are no problems, the system then receives readings for the currents $I_R$, $I_S$ and $I_T$, measured in lines $L_R$, $L_S$ and $L_T$, and converts said readings into RMS currents. Since the motor is being started from a clear full stop position, the currents $I_R$, $I_S$ and $I_T$ will be necessarily equal to zero. Nevertheless, a start order may be given to the motor during a turnoff process, which will be disclosed below, and in this case, the currents $I_R$, $I_S$ and $I_T$ will not be equal to zero. Figure 2 is a simplified schematic block view that shows the initial operation process of the protection system, where constant measurements of RMS tensions and also RMS currents are taken when the motor is in operation. These data are displayed in a communication interface 3. The system waits for clearance to start the motor.

Figure 3 is a simplified schematic block view that shows the motor turnoff process when the system does not receive external authorization to start it.

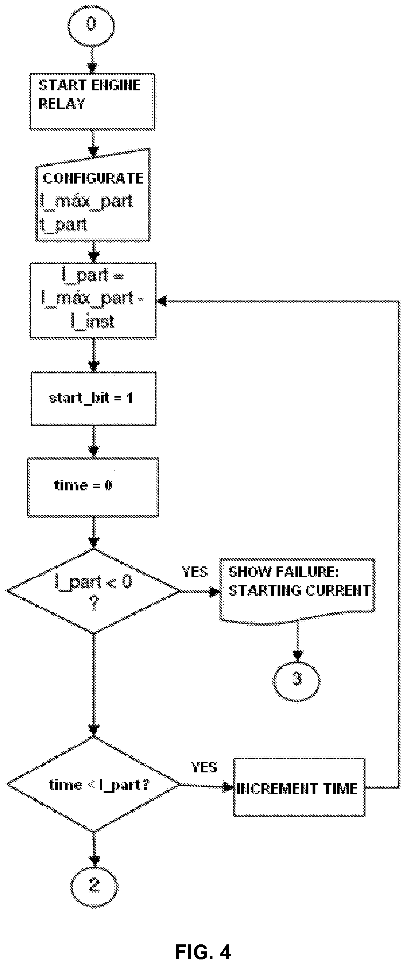

After the authorization to start the motor M is received, the relays/interface 4 of the motor are activated and sensors SC1, $SC_2$ and $SC_3$ begin to inform the processor 2 of the readings for currents $I_R$, $I_S$ and $I_T$ measured in lines $L_R$, $L_S$ and $L_T$. Figure 4 shows the motor start process and the analysis of peak currents during the expected start time. At the start of the motor M, if a peak of current is detected, i. e., a current value higher than a previously configured value $I_{max\ part}$ (locked rotor current), this will be interpreted as a situation of locked motor rotor and an alarm will be activated (by the communication interface 3) and the motor M will be immediately turned off by the protection system.

After the motor M start stage, the system begins to control a number of characteristics of the motor operation to prevent that any failure from either the motor or the feeding network compromises or damages the motor or any equipment connected to it.

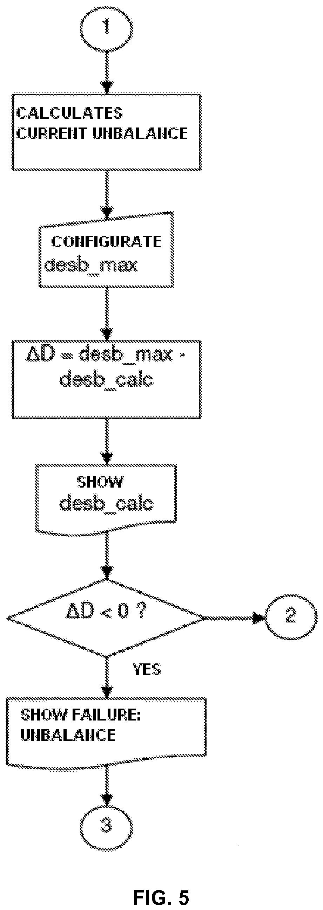

Thus, the first characteristic to be analyzed, in the operation tests, is the possibility of imbalance. Figure 5 shows the process to calculate imbalance (desb_calc) between the three-phase electric currents of the motor in accordance with the IEC 34-1 norm. The calculated value is compared with a maximum value established for the imbalance (desb_max) and, if said limit is exceeded, the system turns off the motor by means of the interface 4 that activates the contactor K and informs the failure to the communication interface 3. In accordance with the IEC 34-1 norm, the calculation of the imbalance (DSB) is given by the following equation:

$$DSB = 100 \text{ X } (0.5-(0.75(1-2(I_R{}^\wedge 4+I_S{}^\wedge 4+I_T{}^\wedge 4)/(I_R{}^2+I_S{}^2+I_T{}^2)^2))^\wedge 0.5)^\wedge 0.5 \text{ (in \%)}$$

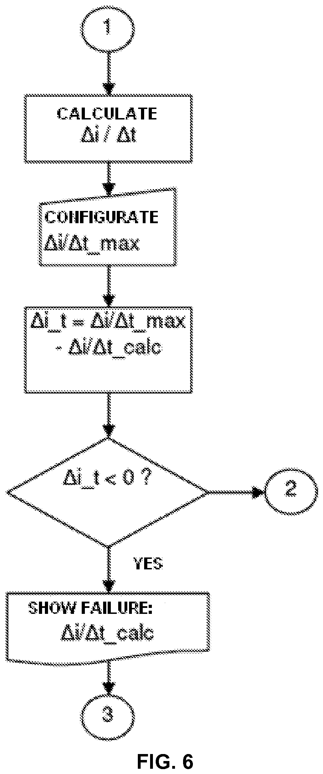

Still, regarding the operation tests, a second characteristic analyzed is the current fluctuation. Figure 6 shows the process of calculation of $\Delta i/\Delta t$ in each current involved. The calculated $\Delta i/\Delta t$ value is compared with a maximum stipulated value and, if the maximum value is exceeded, the system immediately turns off the motor and informs the failure to the communication interface 3.

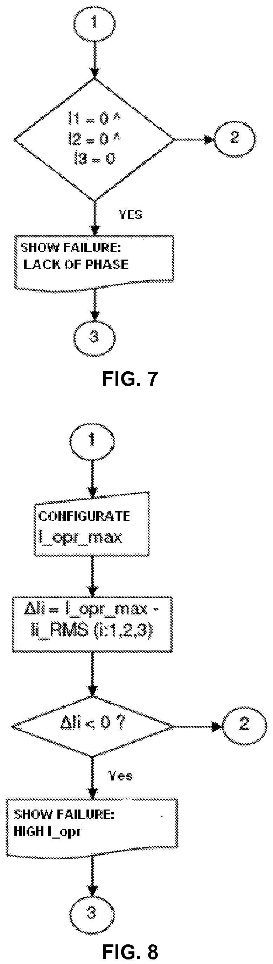

In another operation test, a third characteristic analyzed is the lack of phase. Figure 7 shows the process that characterizes lack of phase. A lack of phase is characterized when two of the three currents $I_R$, $I_S$ and $I_T$, measured in lines $L_R$, $L_S$ and $L_T$, respectively connected to each electric door of the motor M, have an electric current which is higher than zero and only one of the three currents has a current value of zero. In this case, the system acts on the contactor K to turn off the motor M, also informing the failure to the communication interface 3.

In another operation test, an over current in the feeding of the motor M is analyzed. Figure 8 shows the comparison process between each one of the electric currents $I_R$, $I_S$ and $I_T$ of the electric motor in operation, measured by sensors $SC_1$, $SC_2$ and $SC_3$ with a defined maximum current (I_opr_max). When the comparison concludes that one or more electric currents exceeds the maximum value previously set, the system turns off the motor M and informs the failure to the communication interface 3.

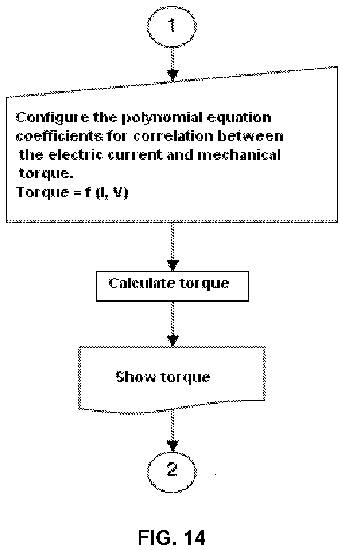

One more operation test refers to the control of mechanical torque of the motor M. Figure 14 shows the process to calculate and present the torque regarding current RMS and tension RMS, as well as the entry of data to configure the polynomial equation coefficients of up to the 9th degree. Specifically, as known, the electric current and the mechanical torque are proportional by the proportionality constants, which take into consideration the tension of the electric supply and other factors. Therefore, the proportionality between current and torque is calculated by using a polynomial function of up to the 9th degree whose coefficients are entered in the system (specifically in the processor 2 by the communication interface 3) according to the characteristics of the motor M. Thus, the system includes an inlet to write a polynomial function, where the coefficients may be changed in order to ensure the correlation between the electric current and mechanical torque. As a result, the communication interface 3 shows on the display the value as calculated for the mechanical torque.

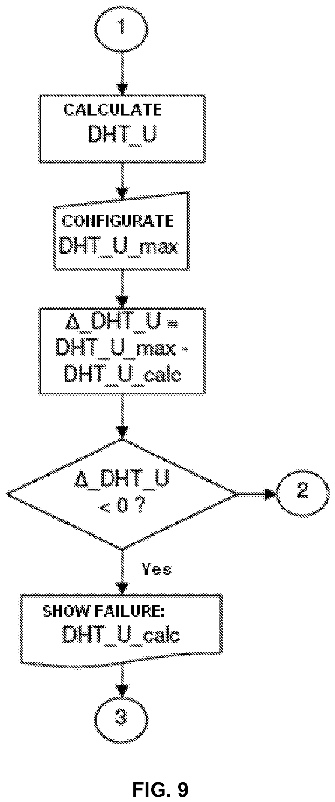

Another test refers to the presence of harmonic distortion in the feeding of the motor M. Figure 9 shows the process to calculate the full harmonic distortion (DHT_U) of the three-phase electric tension that is applied to the electric doors of the motor. From currents $I_R$, $I_S$ and $I_T$ and tensions $U_R$, $U_S$ and $U_T$, the processor 2 decomposes the harmonic signals by the Fourier series and then calculates the rate of immunity or the harmonic tension level admissible to the motor, according to the IEC norm standards. This value is then analyzed and, if it exceeds the established maximum limits for the class of motor connected to the system, as previously configured, the system turns off the motor and informs the failure to the communication interface 3.

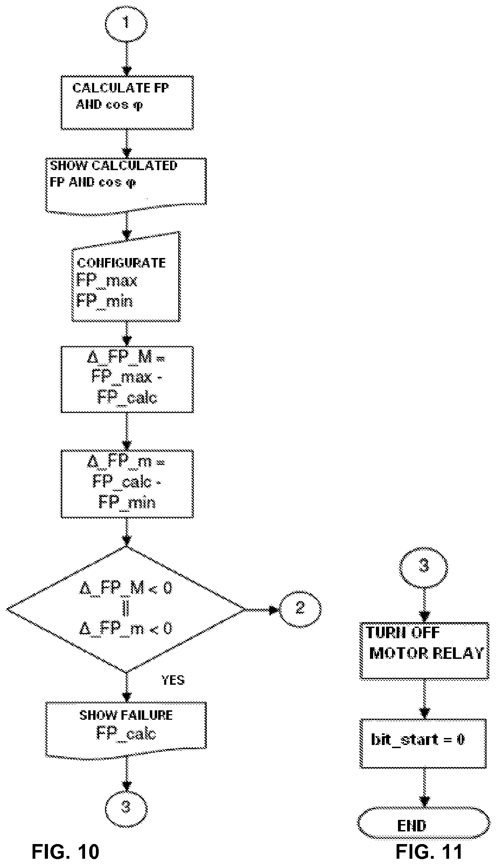

One more test refers to the control of the motor power factor. Figure 10 shows the process to calculate cos φ and the real power factor (FP) of the motor. The system informs the FP value in real time to the communication interface 3. Maximum and minimum values should be defined for the power factor so that, if the calculated power factor goes beyond any of the limits, the system turns off the motor and informs the data of the failure to the communication interface 3.

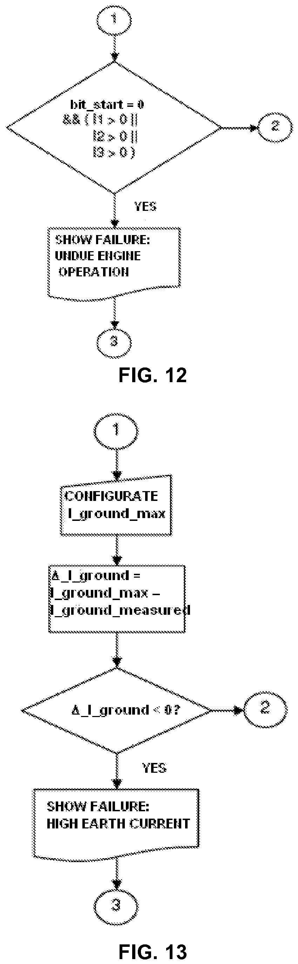

A last operation test that is carried out by the system of the present invention refers to possible damage to the motor due to the presence of relevant current on line $L_{Earth}$. Figure 13 shows the process of current measurement on the line $L_{Earth}$ that is connected to the motor M to ensure that the motor only works if the measured current (I_earth_measured) on that conductor is lower than a previously determined value (I_earth_max). The aim of said test is to control motor integrity, particularly regarding the shortening of motor life, wear of stator insulating resin, high humidity in winding, etc. Therefore, if said value goes beyond a previously defined limit, the system immediately turns off the motor.

For any of the hypotheses of motor 3 turnoff, the turnoff procedure is shown in Figure 11, which is a simplified schematic block view that illustrates the motor turnoff process in case of failure.

As a result of these kinds of turnoff, or even of a regular turnoff of the motor M, problems may still occur and be controlled by the system of the present invention. Particularly, serious failure occurs when the motor is being turned off and, for some reason, motor turn-on process is unduly started. This may occur in two different forms, as follows: the first situation is when the external actuator 5 does not send a start signal to the system and in some way, the motor is externally started; the second situation occurs when the external actuator 5 sends the start motor signal to the system, and the system turns off the motor due to the detection of any of the possible failures that the system is designed to detect, and somehow the motor continues in operation or starts even if interface 4 inhibits its operation. Figure 12 illustrates the process to characterize undue start of the motor by means of a start operation outside the system disclosed by the present invention. Such failure is characterized by the existence of a non-null current in any of the feeding lines of the motor. As a result of the presence of an undue current $I_R$, $I_S$ or $I_T$, measured in lines $L_R$, $L_S$ or $L_T$, respectively, the system of the present invention registers such incoherence in the system and informs it in the communication interface 3. In addition, the communication interface 3 also activates an alarm to indicate such anomalous situation.

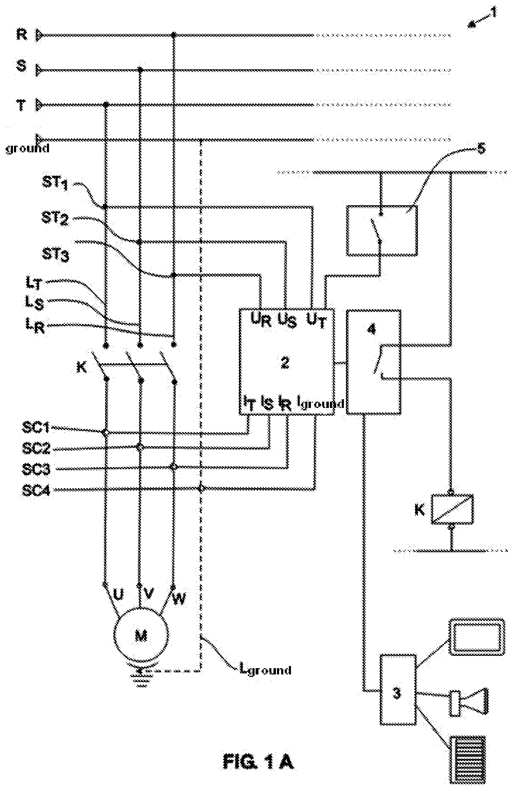

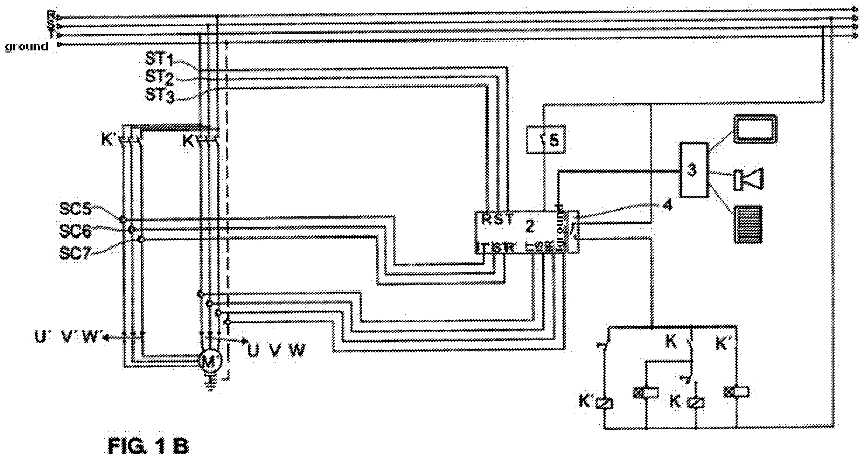

In an alternative form of embodiment of the invention, as shown in Figure 1B, the system of the present invention may also be used to monitor M' three-phase electric motors that have six electric doors, as the motors that allow start by the "triangle-star" method or the "divided start" method (Figure 1B shows an M' motor that can be started by the "divided start" method). Experts in the art will realize that, within the parameters of the present invention, the invention can be applied to any kind of electric motor, notwithstanding the required adaptations due to the number of existing electric doors.

More specifically, and according to Figure 1B, the motor M' has six electric doors U, V, W, U', V', W', which are intermediated by the contactors K, K'. In an equivalent way, tension sensors $ST_{1-3}$ are placed between the electric supply (R, S, T, Earth) and the contactors K, K', while current sensors $SC_{1-7}$ are placed between contactors K, K' and the electric doors U, V, W, U', V', W'.

Obviously, in this form of embodiment of the present invention, the six electric currents $I_R$, $I_S$, $I_T$ and $I_{R'}$, $I_{S'}$, $I_{T'}$ that refer to each electric door of the motor, should be analyzed. By a previous configuration, the system is informed of the number of electric currents to be analyzed.

Accordingly, all the analyses remain unchanged, but we should observe that, in the case of analysis of six electric currents, the lack of phase will be analyzed simultaneously between currents $I_R$, $I_S$, $I_T$ and $I_{R'}$, $I_{S'}$, $I_{T'}$, and the imbalance will be calculated between currents $I_R$, $I_S$, $I_T$ and between currents $I_{R'}$, $I_{S'}$, $I_{T'}$. This way, all the analyses will be made simultaneously for each set of three currents.

In order to summarize the different forms of operation of the system of the present invention, we include Table 1 below, which shows the tests made in the motor, the variables employed in the respective tests and the operation of the system in the case of discrepancy between the variable, or the characteristic calculated from it.

Table 1

| Analysis | Object | Calculation | Operation |
|----------|--------|-------------|-----------|
|          |        |             |           |

(continued)

| Analysis | Object | Calculation | Operation |
|---|---|---|---|
| Start (Figure 4 - object 3) | Start currents $I_R$, $I_S$ and $I_T$ ($I_{R'}$, $I_{S'}$, $I_{T'}$) | Compares start $I_R$, $I_S$ and IT ($I_{R'}$, $I_{S'}$, $I_{T'}$) with locked rotor current ($I_{max\_part}$) | Compares each current with the limit given by locked rotor current - interrupts start of the motor (indication of locked rotor) |
| Imbalance (Figure 5 - object 5) | $I_R$, $I_S$ and $I_T$ ($I_{R'}$, $I_{S'}$, $I_{T'}$) | $I_R \approx I_S \approx I_T$ as per IEC 34-1 (and $I_{R'} = I_{S'} \approx I_{T'}$) | Detects an imbalance between the individual currents of each phase - turns off the motor if the difference is higher than the set limit. |
| Current fluctuation (Figure 6 - object 4) | $I_R$, $I_S$ and $I_T$ ($I_{R'}$, $I_{S'}$, $I_{T'}$) T | Calculates $\Delta i/\Delta t$ and compares them with a given value | Calculates variation of each current according to time - turns off the motor if current increases at a higher rate than determined limit (indication of a possible severe anomaly of the electric supply or the electric motor, such as rotor locked, low insulation, etc.). |
| Lack of phase (Figure 7 - object 1) | $I_R$, $I_S$ and $I_T$ ($I_{R'}$, $I_{S'}$, $I_{T'}$) | Detects the existence of current in the phases $I_R \neq 0$ ; $I_S \neq 0$ ; $I_T \neq 0$ (and $I_{R'} \neq 0$ ; $I_{S'} \neq 0$ ; $I_{T'} \neq 0$) | Determines the existence of current in each phase - turns off the motor if there is lack of current in just one phase (the lack of current in one phase indicates the lack of phase). |
| Over current (Figure 8 - object 2) | $I_R$, $I_S$ and $I_T$ ($I_{R'}$, $I_{S'}$, $I_{T'}$) | Compares $I_R$, $I_S$ and $I_T$ ($I_{R'}$, $I_{S'}$, $I_{T'}$) with a limit current: $I_R >$ | Compares each current with a limit value - turns off motor if any current is higher than limit |
| | | I_opr_max ; $I_S >$ I_opr_max ; $I_T >$ I_opr_max, (or : $I_{R'} >$ I_opr_max ; $I_{S'} >$ I_opr_max ; $I_{T'} >$ I_opr_max) | (protection against over current in any phase) |
| Mechanical torque (Figure 14 - object 2) | $I_R$, $I_S$ and $I_T$ $U_R$, $U_S$ and $U_T$ ($I_{R'}$, $I_{S'}$, $I_{T'}$) | Calculates the torque of the motor from $I_R$, $I_S$ and IT ($I_{R'}$, $I_{S'}$, $I_{T'}$) | Calculates the mechanical torque from the electric current - shows the torque value on the display. |
| Harmonic distortion (Figure 9 - object 7) | $I_R$, $I_S$ and $I_T$ $U_R$, $U_S$ and $U_T$ ($I_{R'}$, $I_{S'}$ $I_{T'}$) | Decomposition of harmonic signals by Fourier series + comparison with the class of motor | Decomposes harmonic signals by Fourier series and calculates immunity rate or level of harmonic tension admissible to the motor according to IEC parameters - turns off motor if level of harmonic tension is higher than the limit established for the class of motor. |
| Power factor (Figure 10 - object 6) | $I_R$, Is and $I_T$ $U_R$, $U_S$ and $U_T$ ($I_{R'}$, $I_{S'}$, $I_{T'}$) | Calculates cos $\varphi$ and power factor + compares FP with minimum and maximum limits | Compares FP with minimum and maximum limits - turns off motor if FT is out of the allowed operation interval |
| Motor damage (Figure 13 - object 8) | $I_{Earth}$ | Measures escape current (I_earth_measure) in line $L_{Earth}$ and compares it with a previously defined value | Compares escape current with given value - turns off the motor if escape current is higher than determined value (indicates shortening motor life, wear in the insulating resin in the stator, high humidity in winding, etc.) |
| Undue start (Figures 11 and 12) | $I_R$, $I_S$ and $I_T$ ($I_{R'}$, $I_{S'}$, $I_{T'}$) | Detects existence of current in phases $I_R \neq 0$ ; $I_S \neq 0$ ; $I_T \neq 0$ (or $I_{R'} \neq 0$ ; $I_{S'} \neq 0$ ; $I_{T'} \neq 0$) | Identifies undue start of the motor during motor turnoff process - registers this failure |

Finally, the present invention also comprises a protection method for an electric motor M from a number of

tension sensors $ST_{1-n}$ and current sensors $SC_{1-n}$, that are Hall effect current sensors, the tension sensors being located upstream from the contactor K and the current sensors being located downstream from the contactor K. Thus, the method comprises initially the following steps:

> A1. to detect the feeding tension $U_R$, $U_S$ and $U_T$ during the start procedure of the motor M, in each feeding phase R, S and T, and the feeding currents of the motor M in each feeding phase R, S and T, and to present the tensions and currents detected by means of the communication interface 3;
> A2. to start the motor M; and
> A3. to detect start currents $I_R$, $I_S$ and $I_T$ and compare said currents with blocked rotor current $I_{max\ part;}$ if any start current is higher than the blocked rotor current, to turn off the motor.

After these steps of the start stage, the motor M begins effective operation, and the method begins to monitor the following new parameters:

> B1. to identify an imbalance between the feeding phases R, S and T from the currents $I_R$, $I_S$ and $I_T$;
> B2. to identify a current fluctuation $\Delta i/\Delta t$ from the currents $I_R$, $I_S$ and $I_T$ in relation to time T;
> B3. to identify lack of phase in any one of the phases R, S or T, by the determination of a phase current $I_R$, $I_S$ and $I_T$ equal to zero;
> B4. to identify an over current in any of the feeding phases R, S or T, by the comparison of each of the phase currents $I_R$, $I_S$ and $I_T$ with a limit value I_opr_max for the currents;
> B5. to calculate the mechanical torque of the motor M from the currents $I_R$, $I_S$ and $I_T$ and the tensions $U_R$, $U_S$ and $U_T$, and present the value calculated for the torque;
> B6. to identify a harmonic distortion in the feeding, from the currents $I_R$, $I_S$ and $I_T$ and the tensions $U_R$, $U_S$ and $U_T$;
> B7. to identify a power factor out of operation standards by the calculation of cos $\varphi$ and the power factor from the currents $I_R$, $I_S$ and $I_T$ and the tensions $U_R$, $U_S$ and $U_T$; and
> B8. to identify possible damage to the motor from the determination of the escape current I_earth_measured in line $L_{Earth}$.

When the operator wants to turn off the motor, or when any one of the monitoring steps of the motor operation indicates a failure that may damage the motor, the method of the present invention also includes the follow-up of said turnoff stage by the following steps:

> C1. to detect the motor M turnoff command;
> C2. to turn off the motor relay 4;
> C3. to identify an undue actuation of the motor by the determination of a phase current $I_R$, $I_S$ and $I_T$ different from zero; if any of the phase currents $I_R$, $I_S$ and $I_T$ is different from zero, set off an alarm and register said failure.

It is important to highlight that, as in the configuration indicated in Figure 1B, the same equivalence of procedures can be applied to the methods disclosed above. So, in a motor M' provided with six electric doors, instead of testing just the currents $I_R$, $I_S$ and $I_T$, all currents $I_R$, $I_S$, $I_T$ and $I_{R'}$, $I_{S'}$, $I_{T'}$ are tested.
The system of the present invention, which applies method of invention rules, provides full control of the electric motor, preserving the motor life and safeguarding other devices that may be connected to the motor, such as a compressor in a refrigeration system.

**Claims**

1. Electronic system to protect electric motors, where the motor is a three-phase electric motor, comprising a plurality of sensors ($ST_{1-n}$, $SC_{1-n}$) and a plurality of rules to evaluate currents and tensions measured in the motor (M, M'), wherein the tension sensors ($ST_{1-n}$) are placed before a contactor (K, K') and the current sensors ($SC_{1-n}$) are located between the contactor (K, K') and the feeding terminals (U, V, W, U', V', W') of the motor (M, M'); said system further comprises a processor (2) to execute said rules from the readings made by the sensors ($ST_{1-n}$, $SC_{1-n}$), a communication interface (3) connected to the processor (2) to present results of the application of the rules and an actuation interface (4) connected to the processor (2) which acts on the contactor (K, K'); and wherein the rules include:

> a. rules related to motor start;
> b. rules related to motor operation; and
> c. rules related to motor turnoff;

and wherein the rules regarding motor start comprise:

to detect the feeding tension ($U_R$, $U_S$, $U_T$) during the procedure of motor start (M, M') in each one of the feeding phases (R, S, T), and to detect the motor (M, M') feeding currents in each feeding phase (R, S, T) and to present the tensions and currents detected by means of the communication interface (3); and
to start the motor (M, M');

and wherein the rules regarding the operation of the motor comprise:

to identify an over current in any of the feeding phases (R, S, T) by comparing each one of the phase currents ($I_R$, $I_S$, IT, $I_{R'}$, $I_{S'}$, $I_{T'}$) with a limit value (I_opr_max) for the currents;
to calculate the mechanical torque of the motor (M, M') from the currents ($I_R$, $I_S$, $I_T$, $I_{R'}$, $I_{S'}$, $I_{T'}$) and the tensions ($U_R$, $U_S$, $U_T$) and to present the value calculated for the torque;
to identify a power factor out of operation standards by calculating cos $\varphi$ and the power factor (FP) from the currents ($I_R$, $I_S$, $I_T$, $I_{R'}$, $I_{S'}$, $I_{T'}$) and the tensions ($U_R$, $U_S$, $U_T$); and
to identify possible damage to the motor from the determination of the escape current (I_earth_measured) in line $L_{Earth}$; if any calculated and/or measured parameter is out of the corresponding operation range and/or above or below a given limit, the motor M is turned off;

and wherein the rules regarding motor turnoff comprise:

to detect a motor (M, M') turnoff command; and
to turn off the motor relay/actuation interface (4);

**characterized in that** the current sensors ($SC_{1-n}$) are Hall effect type sensors and the rules regarding motor start further comprise:

to detect the start currents ($I_R$, $I_S$, $I_T$, $I_{R'}$, $I_{S'}$, $I_{T'}$) and to compare said currents with the blocked rotor current ($I_{max\ part}$); if any start current is higher than the blocked rotor current, to turn off the motor;

and the rules regarding the operation of the motor further comprise:

to identify a current fluctuation ($\Delta i/\Delta t$) from the currents ($I_R$, $I_S$, $I_T$, $I_{R'}$, $I_{S'}$, $I_{T'}$) in relation to time (T);
to identify lack of phase in any of the phases (R, S, T) from the feeding, by determining a phase current ($I_R$, $I_S$, $I_T$, $I_{R'}$, $I_{S'}$, $I_{T'}$) equal to zero; and
to identify a harmonic distortion in feeding, from the currents ($I_R$, $I_S$, IT, $I_{R'}$, $I_{S'}$, $I_{T'}$) and the tensions ($U_R$, $U_S$, $U_T$);

and wherein the rules regarding motor turnoff further comprise:

to identify an undue actuation of the motor by determining a phase current ($I_R$, $I_S$, $I_T$, $I_{R'}$, $I_{S'}$, $I_{T'}$) different from zero; if any of the phase currents ($I_R$, $I_S$, $I_T$, $I_{R'}$, $I_{S'}$, $I_{T'}$) is different from zero, to set off an alarm and register said failure.

2. Method to protect three-phase electric motors with an electronic system according to claim 1, comprising the application of a plurality of rules, as follows:

a. rules related to motor start;
b. rules related to motor operation; and
c. rules related to motor turnoff;

and wherein said rules related to motor start comprise the following steps:

to detect the feeding tension ($U_R$, $U_S$, $U_T$) during the procedure of motor start (M, M') in each one of the feeding phases (R, S, T), and the motor (M, M') feeding currents in each feeding phase (R, S, T) and to present the tensions and currents detected by means of the communication interface (3); and
to start the motor (M, M');

and wherein the rules regarding motor turnoff comprise the following steps:

to detect a motor (M, M') turnoff command; and
to turn off the motor relay/actuation interface (4);

and wherein the rules regarding the operation of the motor comprise the following steps:

to identify an over current in any of the feeding phases (R, S, T) by comparing each of the phase currents ($I_R$, $I_S$, IT, $I_{R'}$, $I_{S'}$, $I_{T'}$) with a limit value (I_opr_max) for the currents;
to calculate the mechanical torque of the motor (M, M') from the currents ($I_R$, $I_S$, $I_T$, $I_{R'}$, $I_{S'}$, $I_{T'}$) and the tensions ($U_R$, $U_S$, $U_T$) and to present the value calculated for the torque;
to identify a power factor out of operation standards by calculating cos $\varphi$ and the power factor (FP) from the currents ($I_R$, $I_S$, $I_T$, $I_{R'}$, $I_{S'}$, $I_{T'}$) and the tensions ($U_R$, $U_S$, $U_T$); and
to identify possible damage to the motor from the determination of the escape current (I_earth_measured) in line $L_{Earth}$; if any calculated and/or measured parameter is out of a corresponding operation range and/or above or below a given limit, the motor (M, M') is turned off;

**characterized in that** said rules related to motor start further comprise the following method steps:

to detect the start currents ($I_R$, $I_S$, $I_T$, $I_{R'}$, $I_{S'}$, $I_{T'}$) and compare said currents with the blocked rotor current ($I_{max\ part}$);
if any start current is higher than the blocked rotor current, to turn off the motor;

and wherein said rules regarding motor turnoff further comprises the following steps:

to identify an undue actuation of the motor by determining a phase current ($I_R$, $I_S$, $I_T$, $I_{R'}$, $I_{S'}$, $I_{T'}$) different from zero; if any of the phase currents ($I_R$, $I_S$, $I_T$, $I_{R'}$, $I_{S'}$, $I_{T'}$) is different from zero, to turn off the motor and register said failure;

and wherein said rules regarding the operation of the motor further comprises the following steps:

to identify a current fluctuation ($\Delta i/\Delta t$) from the currents ($I_R$, $I_S$, $I_T$, $I_{R'}$, $I_{S'}$, $I_{T'}$) in relation to time (T);
to identify lack of phase in any of the phases (R, S, T) from the feeding by determining a phase current ($I_R$, $I_S$, $I_T$, $I_{R'}$, $I_{S'}$, $I_{T'}$) equal to zero; and
to identify a harmonic distortion in feeding, from the currents ($I_R$, $I_S$, $I_T$, $I_{R'}$, $I_{S'}$, $I_{T'}$) and the tensions ($U_R$, $U_S$, $U_T$).

3. Method, according to claim 2, **characterized by** the fact that at least one among the rules regarding the operation of the motor may be applied in any order of execution, even simultaneously.


**Patentansprüche**

1. Elektronisches System zum Schutz von Elektromotoren, wobei der Motor ein Dreiphasen-Elektromotor ist, mit mehreren Sensoren ($ST_{1-n}$, $SC_{1-n}$) und mehreren Regeln zur Bewertung von in dem Motor (M, M') gemessenen Strömen und Spannungen, wobei die Spannungssensoren ($ST_{1-n}$) vor einem Schaltschütz (K, K') angeordnet sind und die Stromsensoren ($SC_{1-n}$) zwischen dem Schaltschütz (K, K') und den Versorgungsanschlüssen (U, V, W, U', V', W') des Motors (M, M') angeordnet sind; wobei das System ferner aufweist: einen Prozessor (2) zur Durchführung der Regeln anhand der von den Sensoren ($ST_{1-n}$, $SC_{1-n}$) gelieferten Werte, ein mit dem Prozessor (2) verbundenes Kommunikationsinterface (3) zum Anzeigen von Ergebnissen der Anwendung der Regeln, und ein mit dem Prozessor (2) verbundenes Betätigungsinterface (4), welches au den Schaltschütz (K, K') einwirkt;
und wobei die Regeln aufweisen:

a. Regeln bezüglich des Motorstarts;
b. Regeln bezüglich des Motorbetriebs; und
c. Regeln bezüglich der Motorabschaltung;

und wobei die Regeln bezüglich des Motorstarts aufweisen:

das Detektieren der Versorgungsspannung ($U_R$, $U_S$, $U_T$) während des Vorgangs des Startens des Motors (M, M') in jeder der Versorgungsphasen (R, S, T), und das Detektieren der Versorgungsströme des Motors (M, M') in jeder Versorgungsphase (R, S, T) und das Anzeigen der detektierten Spannungen und Ströme mittels des Kommunikationsinterface (3); und
das Starten des Motors (M, M');

und wobei die Regeln bezüglich des Betriebs des Motors aufweisen:

das Identifizieren eines Überstroms in einer der Versorgungsphasen (R, S, T) durch Vergleichen jedes der Phasenströme ($I_R$, $I_S$, $I_T$, $I_{R'}$, $I_{S'}$, $I_{T'}$) mit einem Grenzwert (I_opr_max) für die Ströme;
das Berechnen des mechanischen Drehmoments des Motors (M, M') aus den Strömen ($I_R$, $I_S$, $I_T$, $I_{R'}$, $I_{S'}$, $I_{T'}$) und den Spannungen ($U_R$, $U_S$, $U_T$) und das Anzeigen des für das Drehmoment berechneten Werts;
das Identifizieren eines Leistungsfaktors anhand von Betriebsstandards durch Berechnen von cos φ und des Leistungsfaktors (FP) anhand der Ströme ($I_R$, $I_S$, $I_T$, $I_{R'}$, $I_{S'}$, $I_{T'}$) und der Spannungen ($U_R$, $U_S$, $U_T$), und
das Identifizieren möglicher Schäden des Motors anhand der Bestimmung des Verluststroms (I_earth_measured) in der Leitung $L_{Earth}$; wenn ein berechneter und/oder gemessener Parameter außerhalb des entsprechenden Betriebsbereichs und/oder über oder unter einer gegebenen Grenze liegt, wird der Motor M abgeschaltet;

und wobei die Regeln bezüglich der Motorabschaltung aufweisen:

das Detektieren eines Befehls zum Abschalten des Motors (M, M'); und
das Abschalten des Motorrelais/Betätigungsinterface (4);

**dadurch gekennzeichnet, dass** die Stromsensoren ($SC_{1-n}$) Halleffektsensoren sind, und die Regeln bezüglich des Motorstarts ferner aufweisen:

das Detektieren der Startströme ($I_R$, $I_S$, $I_T$, $I_{R'}$, $I_{S'}$, $I_{T'}$) und das Vergleichen dieser Ströme mit dem Rotorblockierstrom ($I_{max\ part}$); das Abschalten des Motors, wenn ein Startstrom höher als der Rotorblockierstrom ist;

und die Regeln bezüglich des Betriebs des Motors ferner aufweisen:

das Identifizieren einer Stromschwankung ($\Delta i/\Delta t$) anhand der Ströme ($I_R$, $I_S$, $I_T$, $I_{R'}$, $I_{S'}$, $I_{T'}$) in Bezug auf die Zeit (T);
das Identifizieren eines Ausfalls einer Phase in einer der Phasen (R, S, T) anhand der Versorgung durch das Bestimmen eines Phasenstroms ($I_R$, $I_S$, $I_T$, $I_{R'}$, $I_{S'}$, $I_{T'}$) der gleich null ist; und
das Identifizieren einer harmonischen Verzerrung der Versorgung anhand der Ströme ($I_R$, $I_S$, $I_T$, $I_{R'}$, $I_{S'}$, $I_{T'}$) und der Spannungen ($U_R$, $U_S$, $U_T$);

und wobei die Regeln bezüglich der Motorabschaltung ferner aufweisen:

das Identifizieren einer fehlerhaften Betätigung des Motors durch das Bestimmen eines von null verschiedenen Phasenstroms ($I_R$, $I_S$, $I_T$, $I_{R'}$, $I_{S'}$, $I_{T'}$); das Auslösen eines Alarms und das Registrieren des Fehlers, wenn einer der Phasenströme ($I_R$, $I_S$, $I_T$, $I_{R'}$, $I_{S'}$, $I_{T'}$) von null verschieden ist.

2. Verfahren zum Schutz eines Dreiphasen-Elektromotors mit einem elektronischen System nach Anspruch 1, mit der Anwendung mehrerer Regeln wie im Folgenden angegeben:

a. Regeln bezüglich des Motorstarts;
b. Regeln bezüglich des Motorbetriebs; und
c. Regeln bezüglich der Motorabschaltung;

und wobei die Regeln bezüglich des Motorstarts die folgenden Schritte aufweisen:

das Detektieren der Versorgungsspannung ($U_R$, $U_S$, $U_T$) während des Vorgangs des Startens des Motors (M, M') in jeder der Versorgungsphasen (R, S, T), und der Versorgungsströme des Motors (M, M') in jeder Versorgungsphase (R, S, T) und das Anzeigen der detektierten Spannungen und Ströme mittels des Kommunikationsinterface (3); und
das Starten des Motors (M, M');

und wobei die Regeln bezüglich der Motorabschaltung die folgenden Schritte aufweisen:

das Detektieren eines Befehls zum Abschalten des Motors (M, M'); und
das Abschalten des Motorrelais/Betätigungsinterface (4);

und wobei die Regeln bezüglich des Betriebs des Motors die folgenden Schritte aufweisen:

das Identifizieren eines Überstroms in einer der Versorgungsphasen (R, S, T) durch Vergleichen jedes der Phasenströme ($I_R$, $I_S$, $I_T$, $I_{R'}$, $I_{S'}$, $I_{T'}$) mit einem Grenzwert (I_opr_max) für die Ströme;
das Berechnen des mechanischen Drehmoments des Motors (M, M') aus den Strömen ($I_R$, $I_S$, $I_T$, $I_{R'}$, $I_{S'}$, $I_{T'}$) und den Spannungen ($U_R$, $U_S$, $U_T$) und das Anzeigen des für das Drehmoment berechneten Werts;
das Identifizieren eines Leistungsfaktors anhand von Betriebsstandards durch Berechnen von cos φ und des Leistungsfaktors (FP) anhand der Ströme ($I_R$, $I_S$, $I_T$, $I_{R'}$, $I_{S'}$, $I_{T'}$) und der Spannungen ($U_R$, $U_S$, $U_T$), und
das Identifizieren möglicher Schäden des Motors anhand der Bestimmung des Verluststroms (I_earth_measured) in der Leitung $L_{Earth}$; wenn ein berechneter und/oder gemessener Parameter außerhalb des entsprechenden Betriebsbereichs und/oder über oder unter einer gegebenen Grenze liegt, wird der Motor M abgeschaltet;

**dadurch gekennzeichnet, dass** die Regeln bezüglich des Motorstarts ferner die folgenden Verfahrensschritte aufweisen:

das Detektieren der Startströme ($I_R$, $I_S$, $I_T$, $I_{R'}$, $I_{S'}$, $I_{T'}$) und das Vergleichen dieser Ströme mit dem Rotorblockierstrom ($I_{max\ part}$); das Abschalten des Motors, wenn ein Startstrom höher als der Rotorblockierstrom ist;

und wobei die Regeln bezüglich der Motorabschaltung ferner die folgenden Schritte aufweisen:

das Identifizieren einer fehlerhaften Betätigung des Motors durch das Bestimmen eines von null verschiedenen Phasenstroms ($I_R$, $I_S$, $I_T$, $I_{R'}$, $I_{S'}$, $I_{T'}$); das Auslösen eines Alarms und das Registrieren des Fehlers, wenn einer der Phasenströme ($I_R$, $I_S$, $I_T$, $I_{R'}$, $I_{S'}$, $I_{T'}$) von null verschieden ist;

und wobei die Regeln bezüglich des Betriebs des Motors ferner die folgenden Schritte aufweisen:

das Identifizieren einer Stromschwankung ($\Delta i/\Delta t$) anhand der Ströme ($I_R$, $I_S$, $I_T$, $I_{R'}$, $I_{S'}$, $I_{T'}$) in Bezug auf die Zeit (T);
das Identifizieren eines Ausfalls einer Phase in einer der Phasen (R, S, T) anhand der Versorgung durch das Bestimmen eines Phasenstroms ($I_R$, $I_S$, $I_T$, $I_{R'}$, $I_{S'}$, $I_{T'}$) der gleich null ist; und
das Identifizieren einer harmonischen Verzerrung der Versorgung anhand der Ströme ($I_R$, $I_S$, $I_T$, $I_{R'}$, $I_{S'}$, $I_{T'}$) und der Spannungen ($U_R$, $U_S$, $U_T$).

3.  Verfahren nach Anspruch 2, **dadurch gekennzeichnet, dass** mindestens eine der Regeln bezüglich des Betriebs des Motors in beliebiger Reihenfolge, selbst gleichzeitig angewandt werden kann.

**Revendications**

1.  Système électronique pour protéger des moteurs électriques, où le moteur est un moteur électrique triphasé, comprenant une pluralité de capteurs ($ST_{1-n}$, $SC_{1-n}$) et une pluralité de règles pour évaluer les courants et les tensions mesurés dans le moteur (M, M'), dans lequel les capteurs de tension ($ST_{1-n}$) sont placés avant un contacteur (K, K') et les détecteurs de courant ($SC_{1-n}$) sont situés entre le contacteur (K, K') et les bornes d'alimentation (U, V, W, U', V', W') du moteur (M, M') ; ledit système comprend en outre un processeur (2) pour exécuter lesdites règles à partir des lectures réalisées par les capteurs ($ST_{1-n}$, $SC_{1-n}$), une interface de communication (3) connectée au processeur (2) pour présenter les résultats de l'application des règles et une interface d'actionnement (4) connectée au processeur (2) qui agit sur le contacteur (K, K') ;
et dans lequel les règles comprennent :

a. des règles associées au démarrage du moteur ;
b. des règles associées au fonctionnement du moteur ; et
c. des règles associées à l'arrêt du moteur ;

et dans lequel les règles concernant le démarrage du moteur comprennent :

la détection de la tension d'alimentation ($U_R$, $U_S$, $U_T$) pendant la procédure de démarrage du moteur (M, M') dans chacune des phases d'alimentation (R, S, T), et la détection des courants d'alimentation du moteur (M, M') dans chaque phase d'alimentation (R, S, T) et la présentation des tensions et des courants détectés au moyen de l'interface de communication (3) ; et

le démarrage du moteur (M, M') ;

et dans lequel les règles concernant le fonctionnement du moteur comprennent :

l'identification d'une surintensité dans l'une quelconque des phases d'alimentation (R, S, T) en comparant chacun des courants de phase ($I_R$, $I_S$, $I_T$, $I_{R'}$, $I_{S'}$, $I_{T'}$) avec une valeur limite (I_opr_max) pour les courants ;

le calcul du couple mécanique du moteur (M, M') à partir des courants ($I_R$, $I_S$, $I_T$, $I_{R'}$, $I_{S'}$, $I_{T'}$) et des tensions ($U_R$, $U_S$, $U_T$) et la présentation de la valeur calculée pour le couple ;

l'identification d'un facteur de puissance en dehors des normes de fonctionnement en calculant cos $\varphi$ et le facteur de puissance (FP) à partir des courants ($I_R$, $I_S$, $I_T$, $I_{R'}$, $I_{S'}$, $I_{T'}$) et des tensions ($U_R$, $U_S$, $U_T$) ; et

l'identification d'un endommagement possible du moteur à partir de la détermination du courant de fuite (I_earth_measured) dans la ligne $L_{Earth}$ ; si un paramètre calculé et/ou mesuré est en dehors de la plage de fonctionnement correspondante et/ou au-dessus ou au-dessous d'une limite donnée, le moteur M est arrêté ;

et dans lequel les règles concernant l'arrêt du moteur comprennent :

la détection d'une commande d'arrêt du moteur (M, M') ; et

l'arrêt de l'interface de relais/actionnement de moteur (4) ;

**caractérisé en ce que** les détecteurs de courant ($SC_{1-n}$) sont des capteurs de type à effet Hall et les règles concernant le démarrage du moteur comprennent en outre :

la détection des courants de démarrage ($I_R$, $I_S$, $I_T$, $I_{R'}$, $I_{S'}$, $I_{T'}$) et la comparaison desdits courants avec le courant à rotor bloqué ($I_{max}$ part) ; si le courant de démarrage est supérieur au courant à rotor bloqué, l'arrêt du moteur ;

et les règles concernant le fonctionnement du moteur comprennent en outre :

l'identification d'une fluctuation de courant ($\Delta i/\Delta t$) à partir des courants ($I_R$, $I_S$, $I_T$, $I_{R'}$, $I_{S'}$, $I_{T'}$) en relation avec le temps (T) ;

l'identification d'une absence de phase parmi les phases (R, S, T) à partir de l'alimentation, en déterminant un courant de phase ($I_R$, $I_S$, $I_T$, $I_{R'}$, $I_{S'}$, $I_{T'}$) égal à zéro ; et

l'identification d'une distorsion harmonique dans l'alimentation, à partir des courants ($I_R$, $I_S$, $I_T$, $I_{R'}$, $I_{S'}$, $I_{T'}$) et des tensions ($U_R$, $U_S$, $U_T$) ;

et dans lequel les règles concernant l'arrêt du moteur comprennent en outre :

l'identification d'un actionnement excessif du moteur en déterminant un courant de phase ($I_R$, $I_S$, $I_T$, $I_{R'}$, $I_{S'}$, $I_{T'}$) différent de zéro ; si l'un quelconque des courants de phase ($I_R$, $I_S$, $I_T$, $I_{R'}$, $I_{S'}$, $I_{T'}$) est différent de zéro, le déclenchement d'une alarme et l'enregistrement de ladite défaillance.

2. Procédé pour protéger des moteurs électriques triphasés par un système électronique selon la revendication 1, comprenant l'application d'une pluralité de règles, telles que :

a. des règles associées au démarrage du moteur ;
b. des règles associées du fonctionnement du moteur ; et
c. des règles associées à l'arrêt du moteur ;

et dans lequel lesdites règles associées au démarrage du moteur comprennent les étapes suivantes :

la détection de la tension d'alimentation ($U_R$, $U_S$, $U_T$) pendant la procédure de démarrage du moteur (M, M') dans chacune des phases d'alimentation (R, S, T), et des courants d'alimentation du moteur (M, M') dans chaque phase d'alimentation (R, S, T) et la présentation des tensions et des courants détectés au moyen de l'interface de communication (3) ; et

le démarrage du moteur (M, M') ;

et dans lequel les règles concernant l'arrêt du moteur comprennent les étapes suivantes :

la détection d'une commande d'arrêt du moteur (M, M') ; et
l'arrêt de l'interface de relais/actionnement de moteur (4) ;

et dans lequel les règles concernant le fonctionnement du moteur comprennent les étapes suivantes :

l'identification d'une surintensité dans l'une quelconque des phases d'alimentation (R, S, T) en comparant chacun des courants de phase ($I_R$, $I_S$, $I_T$, $I_{R'}$, $I_{S'}$, $I_{T'}$) avec une valeur limite (I_opr_max) pour les courants ;
le calcul du couple mécanique du moteur (M, M') à partir des courants ($I_R$, $I_S$, $I_T$, $I_{R'}$, $I_{S'}$, $I_{T'}$) et des tensions ($U_R$, $U_S$, $U_T$) et la présentation de la valeur calculée pour le couple ;
l'identification d'un facteur de puissance en dehors des normes de fonctionnement en calculant cos φ et le facteur de puissance (FP) à partir des courants ($I_R$, $I_S$, $I_T$, $I_{R'}$, $I_{S'}$, $I_{T'}$) et des tensions ($U_R$, $U_S$, $U_T$) ; et
l'identification d'un endommagement possible du moteur à partir de la détermination du courant de fuite (I_earth_measured) dans la ligne $L_{Earth}$ ; si un paramètre calculé et/ou mesuré est en dehors d'une plage de fonctionnement correspondante et/ou au-dessus ou au-dessous d'une limite donnée, le moteur (M, M') est arrêté ;

**caractérisé en ce que** lesdites règles associées au démarrage du moteur comprennent en outre les étapes de procédé suivantes :

la détection des courants de démarrage ($I_R$, $I_S$, $I_T$, $I_{R'}$, $I_{S'}$, $I_{T'}$) et la comparaison desdits courants avec le courant à rotor bloqué ($I_{max\ part}$) ; si un courant de démarrage est supérieur au courant à rotor bloqué, l'arrêt du moteur ;

et dans lequel lesdites règles concernant l'arrêt du moteur comprennent en outre les étapes suivantes :

l'identification d'un actionnement excessif du moteur en déterminant un courant de phase ($I_R$, $I_S$, $I_T$, $I_{R'}$, $I_{S'}$, $I_{T'}$) différent de zéro ; si l'un quelconque des courants de phase ($I_R$, $I_S$, $I_T$, $I_{R'}$, $I_{S'}$, $I_{T'}$) est différent de zéro, l'arrêt du moteur et l'enregistrement de ladite défaillance ;

et dans lequel lesdites règles concernant le fonctionnement du moteur comprennent en outre les étapes suivantes :

l'identification d'une fluctuation de courant ($\Delta i/\Delta t$) à partir des courants ($I_R$, $I_S$, $I_T$, $I_{R'}$, $I_{S'}$, $I_{T'}$) en relation avec le temps (T) ;
l'identification d'une absence de phase parmi les phases (R, S, T) à partir de l'alimentation en déterminant un courant de phase ($I_R$, $I_S$, $I_T$, $I_{R'}$, $I_{S'}$, $I_{T'}$) égal à zéro ; et
l'identification d'une distorsion harmonique dans l'alimentation, à partir des courants ($I_R$, $I_S$, $I_T$, $I_{R'}$, $I_{S'}$, $I_{T'}$) et des tensions ($U_R$, $U_S$, $U_T$).

3. Procédé selon la revendication 2, **caractérisé par le fait qu'**au moins l'une des règles concernant le fonctionnement du moteur peut être appliquée dans n'importe quel ordre d'exécution, même simultanément.

**FIG. 1 A**

FIG. 1 B

FIG. 2

FIG.3

**FIG. 4**

① 

CALCULATES
CURRENT UNBALANCE

CONFIGURATE
desb_max

$\Delta D$ = desb_max -
desb_calc

SHOW
desb_calc

$\Delta D < 0$ ?  ——→ ②

YES

SHOW FAILURE:
UNBALANCE

③

FIG. 5

**FIG. 6**

① 

◇ I1 = 0 ^
I2 = 0 ^
I3 = 0 → ②

YES

SHOW FAILURE:
LACK OF PHASE

③

**FIG. 7**

① 

CONFIGURATE
I_opr_max

$\Delta Ii = I\_opr\_max - Ii\_RMS\ (i:1,2,3)$

◇ $\Delta Ii < 0$ ? → ②

Yes

SHOW FAILURE:
HIGH I_opr

③

**FIG. 8**

**FIG. 9**

①

CALCULATE FP
AND cos φ

SHOW CALCULATED
FP AND cos φ

CONFIGURATE
FP_max
FP_min

Δ_FP_M =
FP_max -
FP_calc

Δ_FP_m =
FP_calc -
FP_min

Δ_FP_M < 0
||
Δ_FP_m < 0

②

YES

SHOW FAILURE
FP_calc

③

**FIG. 10**

③

TURN OFF
MOTOR RELAY

bit_start = 0

END

**FIG. 11**

23

①

```
bit_start = 0
&& ( I1 > 0 ||
     I2 > 0 ||
     I3 > 0 )
```
→ ②

YES

SHOW FAILURE:
UNDUE ENGINE
OPERATION

③

**FIG. 12**

①

CONFIGURATE
I_ground_max

A_I_ground =
I_ground_max –
I_ground_measured

A_I_ground < 0? → ②

YES

SHOW FAILURE:
HIGH EARTH CURRENT

③

**FIG. 13**

24

Configure the polynomial equation
coefficients for correlation between
the electric current and mechanical
torque.
Torque = f (I, V)

Calculate torque

Show torque

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4453117 A